# EUROPEAN PATENT SPECIFICATION

(11) **EP 3 023 195 B1**
(45) Date of publication and mention of the grant of the patent: **18.10.2017**
(21) Application number: 15194607.6
(22) Date of filing: 13.11.2015
(51) Int. Cl.: B23Q 16/10

(54) **TOOL-HOLDER TURRET**
WERKZEUGREVOLVER
TOURELLE PORTE-OUTILS

(30) Priority: 19.11.2014 IT MI20141997
(43) Date of publication of application: 25.05.2016
(73) Proprietor: Duplomatic Automation S.r.l., 20025 Legnano (Milano) (IT)
(72) Inventor: DE BERNARDI, Franco, 21052 Busto Arsizio (IT)
(74) Representative: Perani, Aurelio

(56) References cited:
- EP-A1- 0 597 413
- EP-A2- 0 299 556
- EP-A2- 0 343 329
- IT-B- 1 138 598

## Description

The present invention relates to a tool-holder turret of the type comprising a stationary base body with a cavity extending along a longitudinal axis, a tool-holding disk capable of rotating in both directions of rotation relative to the stationary base body about an axis of rotation which is coaxial to and coincident with said longitudinal axis, said tool-holding disk being mounted to the end of a shaft which extends along said longitudinal axis, a first cylindrical annular body which is keyed to said shaft and is only free to axially slide thereon between a first axial position and a second axial position against elastic means acting between said first cylindrical body and said tool-holding disk, said first cylindrical body having a plurality of symmetrical cam profiles arranged over a circumference of the front surface of its distal end, with respect to said tool-holding disk, lock members for locking said tool-holding disk relative to said stationary base body when said first cylindrical annular body is in its first axial position and for unlocking it when it is in its second axial position, a second cylindrical annular body, also keyed to said shaft and capable of rotating relative thereto, said second cylindrical annular body having a plurality of cam followers engaged at their front with respective symmetrical can profiles of said first annular body, said cam followers and said cam profiles causing said first cylindrical annular body to axially move on said shaft in either direction as a result of angular displacements of said second cylindrical annular body, an electric servo-motor, which is kinematically linked to said second cylindrical annular body to impart angular displacements thereto in both directions of rotation coaxial to said shaft.

Tool-holder turrets of the aforementioned type are well known in the art.

As described, for instance, in IT 1,138,598, they use an electric motor which, through adequate mechanisms wit cam profiles, unlocks and locks the tool-holding disk from and to the turret body to allow rotation thereof for tool change.

The same electric motor also provides angular displacement of the disk to change the position of the tool being used.

Therefore, these turrets have both advantages of using a single source of energy, i.e. electric power, for their operation and of employing a single motor for both movements.

This provides considerable advantages as compared with other types of turrets, in which electric energy is used to power the motor that actuates the rotation of the tool-holding disk, for tool change, and hydraulic or pneumatic energy is used to cause the actuation of the members of the lock and unlock members for locking and unlocking the tool-holding disk.

The use of two different types of energies for actuation of a tool-holder turret is known to discourage the use thereof, as it requires the provision of all the necessary ducts from the source to the machine tool on which the turret operates.

Nevertheless, the mechanisms that these prior art turrets, as disclosed in IT 1,138,598, use to stop the angular movement of the disk when the turret reaches a new tool position, comprise a peg which snaps into a corresponding notch when the latter is presented before it as the disk is being rotated, and since the notch corresponds to the desired tool position, the electric control device impart a release command to an electromagnet connected to the peg.

This generates shocks and consequent oscillations around the selected stop position, and this requires in turn the provision of damping members, which add complexity to the turret and limit its rotation speed, thereby involving long positioning times, and also increase its cost,

In an attempt to use a single source of energy, particularly electric power, and to simplify the mechanisms for stopping the tool-holding disk when changing tool position at higher speeds to reduce positioning times, the use of two electric servomotors has been suggested, i.e. a first motor for the angular displacement movements of the disk to change the tool position and a second servomotor for the movement required to lock and unlock the tool-holding disk, through cam members, as described, for instance, in WO 2009/012875.

Nevertheless, the use of a second servomotor, as disclosed in WO 2009/012875, implies that it must be equipped with its own electronic control/command devices, in addition to those required by the servomotor that is used for the angular movements of the disk, and this considerably increases the cost of the turret, and also exposes it to possible malfunctions, such as failures or wrong operation of its parts.

Therefore, the object of the present invention is to provide a tool holder turret that uses the electric servomotor that is designed for angular displacement of the disk to change the tool position, to also lock and unlock the tool-holding disk, without being affected by the drawbacks encountered in the above described prior art turrets, and while affording much shorter operating times as compared to those allowed by prior art turrets having a single electric motor.

A further object of the present invention is to provide a technical arrangement for locking and unlocking the tool-holding disk of a turret, which can provide optimized use of the capacity of an electric servomotor in terms of disk displacement speed, once the disk has been unlocked, without increasing the overall costs of the turret and adversely affecting its operational reliability.

These and other objects, as better explained hereafter, are fulfilled by a turret as characterized in the accompanying claim 1.

The invention will be now described in greater detail with reference to certain preferred embodiments thereof, given by way of illustration and without limitation, and shown in the annexed drawings, in which:
- Figure 1 shows a longitudinal section of the turret of the invention, with the tool-holding disk in a locked state relative to the stationary base body;
- Figure 2 shows a longitudinal section of the turret of the invention, with the tool-holding disk in an unlocked state relative to the stationary base body and free to be rotated to change the tool position;

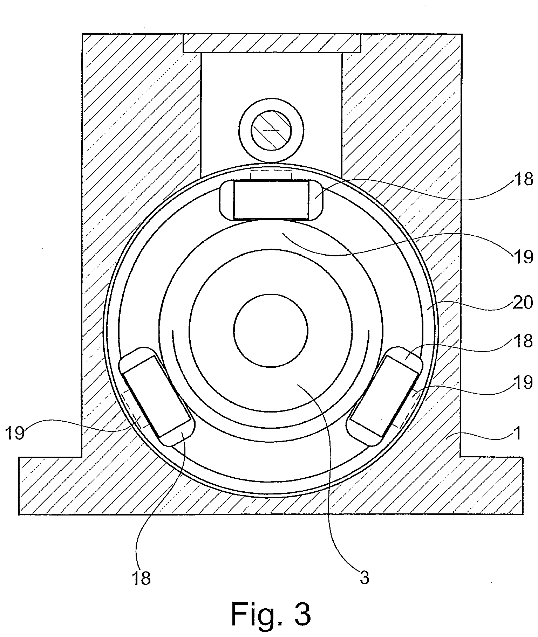

- Figure 3 shows a partially cross sectional view, transverse to the axis of rotation of the tool-holding disk, as taken along the line III-III of Figure 1;
- Figure 4 shows a partially cross sectional view, transverse to the axis of rotation, as taken upon front coupling of the shaft of the tool-holding disk, with the end of the second cylindrical annular body that faces the tool-holding disk, with the turret in the locked position;
- Figure 5 shows a partially sectional view like the one of Figure 4, with the turret unlocked and ready for tool position change;
- Figure 6 shows a straight-extending view of the position taken by the cam profiles of the first cylindrical annular body and the cam followers of the second cylindrical annular body with the turret in the locked position;
- Figure 7 shows a straight-extending view of the position taken by the cam profiles of the first cylindrical annular body and the cam followers of the second cylindrical annular body with the turret in the unlocked position, and ready to be rotated for tool position change;
- Figure 8 shows a longitudinal section of the turret of the invention, in a modified embodiment in which the electric servomotor is offset from the shaft of the tool-holding disk with the tool-holding disk in a locked state relative to the stationary base body.

Referring to the above mentioned figures, numeral 1 designates the stationary base body of the turret, which defines an inner cavity 2 extending along a longitudinal axis X-X coinciding with the axis of rotation of a shaft 3 having the tool-holding disk 5 fixed at its end 4, the tools being generally referenced 5a.

The shaft 3 is controlled in both directions of rotation to displace the tool-holding disk 5, by an electric motor, namely an electric servomotor 6 which, according to the invention, is also used to unlock the tool-holding disk 5 and later lock it once it has been angularly displaced to a different tool position, as described in greater detail hereinafter.

The turret comprises lock members for stable positioning thereof in any work position of the tools.

As is known in the art, these lock members comprise a first ring of teeth or gear 10, which is carried by an annular body 11, rigidly joined to the base body 1 of the turret, a second ring of teeth or gear 12, concentric with the first toothing and carried by an intermediate plate 13 that is rigidly joined to the tool-holding disk 5 on the side that faces away from the tool mounting surface, and a third ring of teeth or gear, referenced 14.

The latter ring of teeth 14 is carried by a first cylindrical annular body 15, which is coaxial with the shaft 3 and can axially move thereon but is prevented from rotating due to a spline engagement. The ring of teeth 14 faces the rings of teeth 10 and 12 with such a radial extent as to engage both gears when said annular body 15 is axially displaced in the turret locking position.

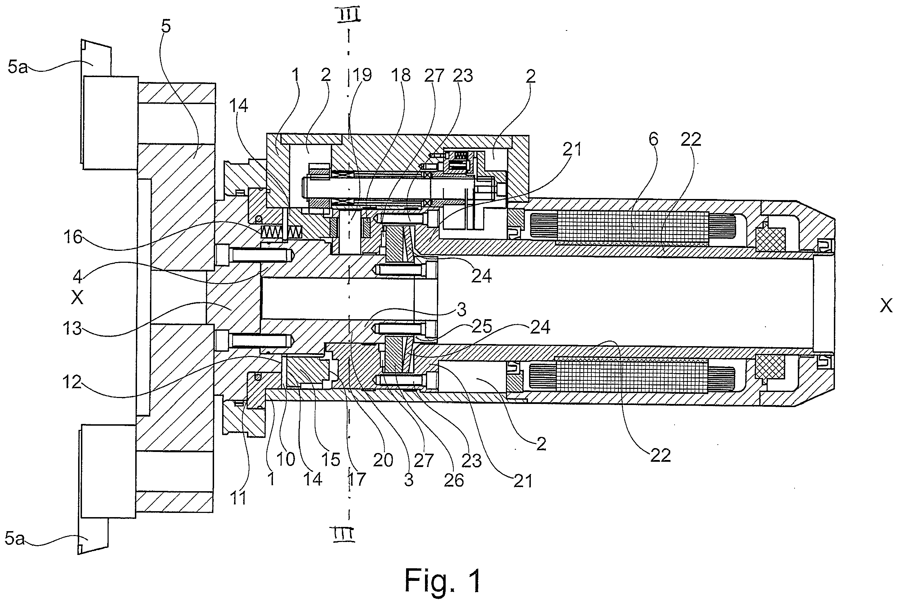

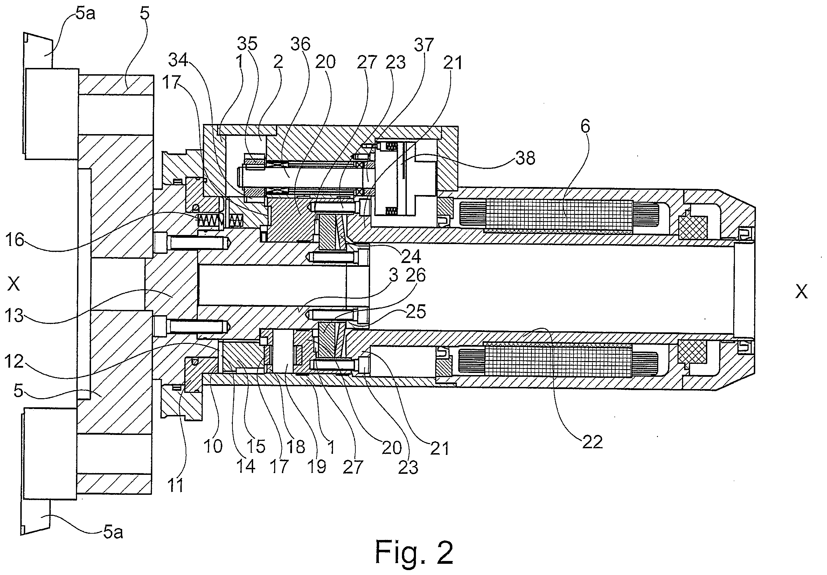

The axial displacement of the first cylindrical annular body 15 and hence the actuation of the lock members for displacement thereof between a locked position, as shown in Figure 1 and an unlocked position, as shown in Figure 2, and vice versa, against a plurality of springs 16, is obtained by the use of cam profiles 17, which are carried at the front of a cylindrical annular body 15 and engage with cam followers, e.g. in the form of rollers 18 mounted by means of a pin 19, to a second cylindrical annular body 20, also mounted to the shaft 3 with the ability of rotating about the axis X-X and axially move toward the shoulder 25.

For this purpose, the second cylindrical annular body 20 is connected to the flange end 21 of the shaft 22 of the servomotor 6 by means of a plurality of peripherally arranged screws 23.

A preloaded axially biasing member, in the form of a disk spring, is placed between said second cylindrical annular body 20 and the flange end 21 of the drive shaft 22, and abuts an axial shoulder 25 formed in said shaft 3.

In the illustrated example, said disk spring is concentric with said shaft 3 of the tool-holding disk 5 and its preload may be adjusted by interposition of a shim, in the form of a washer 26 and a thrust bearing 27.

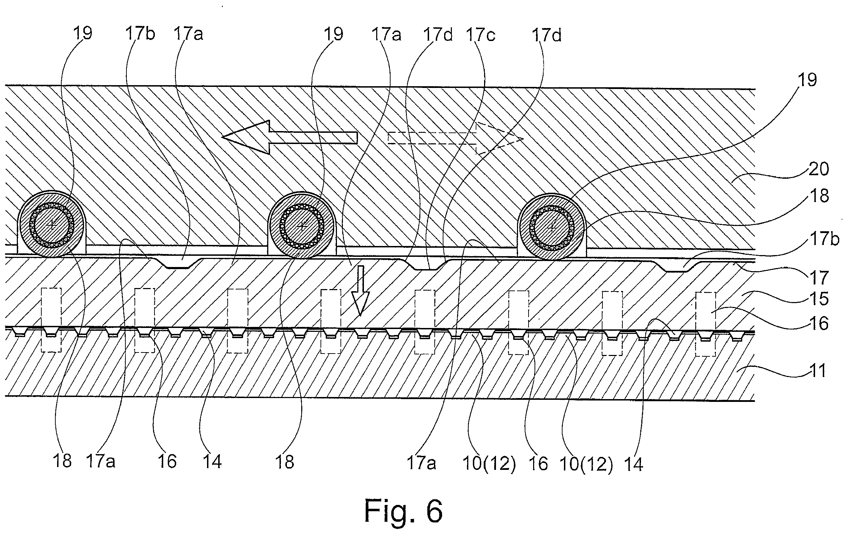

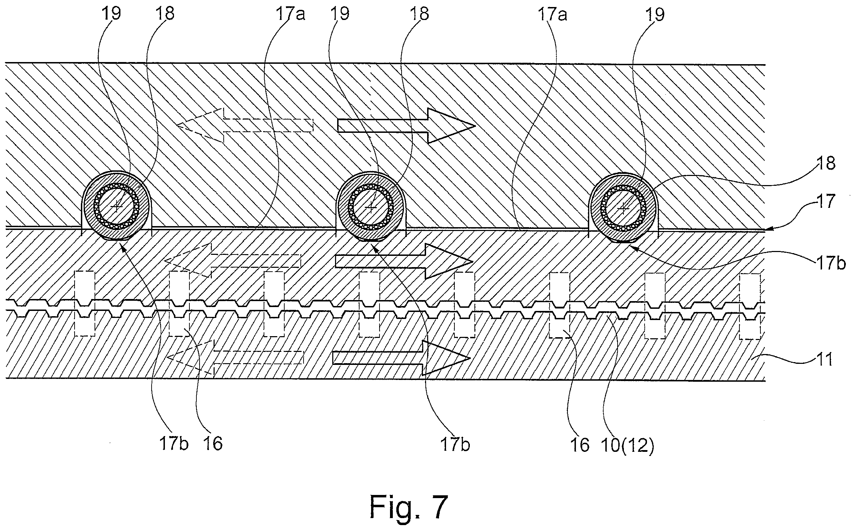

Particularly referring to Figures 6 and 7, it shall be noted that the cam profile of the cylindrical annular body 15, generally referenced 17, comprises flat sections 17a and a plurality of cavities 17b, each having a flat bottom 17c, recessed below the plane of the flat sections of the cam profile. The sides 17d of each cavity are inclined and symmetrical with respect to the center line of the flat bottom and are connected to the flat sections 17a.

The cam follower elements, i.e. the rollers 18, preferably arranged on the cylindrical annular body 20 at the vertices of an equilateral triangle, with the same arrangement as the cavities 17b of the cam profile 17, when these are engaged at their front with the respective flat sections 17a of the cam profile 17, as shown in Figure 6, maintain the first cylindrical annular body 15 axially offset toward the tool-holding disk 5 against the springs 16 and with the gear 14 inserted in the front gears 10 and 12, whereas the cylindrical annular body 20 is axially moved against the shoulder 25 through the thrust bearing 27, the shim 20 and the disk spring 24.

Therefore, the tool-holding disk is in its locked position, as shown in Figure 1, under the preload of the disk spring 24.

Conversely, when the body 20 is rotated in either direction as shown by the arrows of Figures 6 and 7 in response to a command by the servomotor 6, it is angularly displaced around the shaft 3 and the rollers 18 move level to the respective cavities 17b and sink toward the bottom, thereby allowing the first cylindrical annular body 15 to axially move under the action of the springs 16.

Such axial movement allows disengagement of the gear 14 from the gears 10 ad 12, thereby releasing the tool-holding disk 5 for the latter to be free of being angularly rotated for tool position change, as explained hereinbefore.

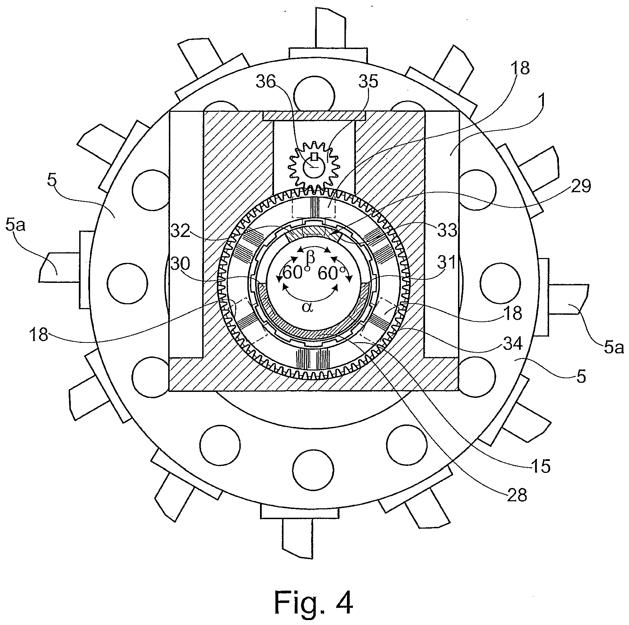

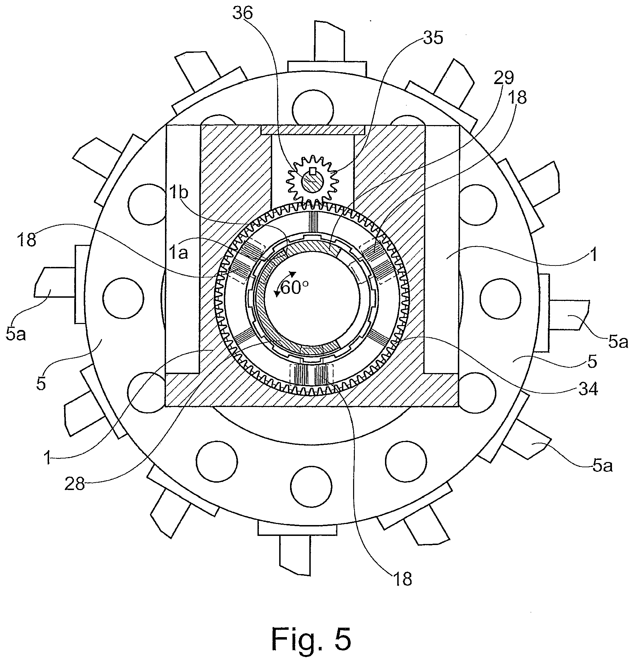

Referring to Figures 4 and 5, it shall be noted that the second cylindrical annular body 20 has a rib 28 on the front surface that faces the first cylindrical annular body 15, said rib axially projecting toward the tool-holding disk 5 and extending over a given arc α of a circumference.

Likewise, the shaft 3 connected to the tool-holding disk 5 has a front shoulder 29 facing the second cylindrical annular body 20 and extending over a given arc β of a circumference which radially coincides with the circumference of the rib 28 of said second cylindrical annular body 20, in the arc of a circumference not occupied by said rib.

The circumferential ends 30 and 31 of said rib 28 and the circumferential ends 32 and 33 of said shoulder 29 define respective abutments which, when engaged together, are adapted to transfer the angular displacements generated by the servomotor 6 to said shaft 3, and hence to transfer the angular movement of the tool-holding disk 5 to change the tool position.

As shown, the circumferential end 30 abuts the circumferential end 32 once the second cylindrical annular body 20 has undergone a clockwise angular, see Figure 4, and will have allowed the first cylindrical annular body 15 to axially move and release the front gear 14 from the gears 10 and 12, and to set the tool-holding disk 5 into an unlocked state, such that it may be rotated for tool position change.

In case of a counterclockwise angular displacement of the second cylindrical annular body 20, the end 31 of the rib 28 will abut the end 33 of the shoulder 29, thereby allowing angular displacement of the disk 5 once the latter has been unlocked.

The first cylindrical annular body 15 which, as mentioned above, is susceptible to axially move on the shaft 3, although it is rigidly joined thereto in its angular displacements, has a ring gear, referenced 34, at its periphery, which is engaged with a pinion 35.

The pinion 35 and the ring gear 34 are mutually and rotatably engaged and capable of relative axial translation.

The pinion 35 is mounted to an auxiliary shaft 36 which, in the example of Figure 1, is oriented parallel to the axis X-X of the shaft 3 of the tool-holding disk 5 and to the shaft 22 of the servomotor 6.

The end 37 of the shaft 36 opposite to that with the pinion 35 is equipped with an electromagnetic brake, generally referenced 38.

When this brake is put in action, it locks the rotation of the shaft 36 and, as a result, through the pinion 35 that is rigidly joined thereto, maintains the first cylindrical annular body 15 in a locked rotation state, by its peripheral ring gear 34, thereby also locking any angular displacement of the shaft 3 and the tool-holding disk 5.

Conversely, when such electromagnetic brake is disabled, the shaft 36 is free to rotate, and so is the pinion 35 and the first cylindrical annular body 15 with the ring gear 34 engaged in the pinion 35.

The above description clearly shows that a single electric servomotor 6 is able to both unlock the tool-holding disk 5 and, once the latter is unlocked, by simultaneous front engagement between the rib 28 and the shoulder 29, impart the required angular displacement to the tool-holding disk 5 for the latter to reach a different tool position.

This is possible because the electromagnetic brake 38 is disabled and the shaft 3 may rotate jointly with the first cylindrical annular body 15 which previously unlocked the gears 14, 10 and 12 that locked the tool-holding disk.

Once the new tool position has been attained, and the electromagnetic brake 38 has been thus put in action, the servomotor 6 reverses its direction of rotation, and imparts an angular displacement to the second cylindrical annular body 29 whose rollers 18 interact with the cam profile 17 of the first cylindrical annular body 17, thereby only causing the axial displacement of said first cylindrical annular body 15 toward the tool-holding disk 5, inserting the gear 14 into the front gears 10 and 12 and causing the tool-holding disk 5 to be locked again.

It shall be noted that, according to the invention, the three typical steps of operation of a turret, i.e. unlocking, rotating the tool-holding disk and locking again, may be carried out with the motor that, at each operating step, accelerates, decelerates and stops for enabling and disabling the brake when all the members are still.

Thus the brake is simply an emergency brake and may operate.

Finally, the use of a servomotor allows accelerating, decelerating and stopping actions to be carried out in very short times and with the requested accuracy.

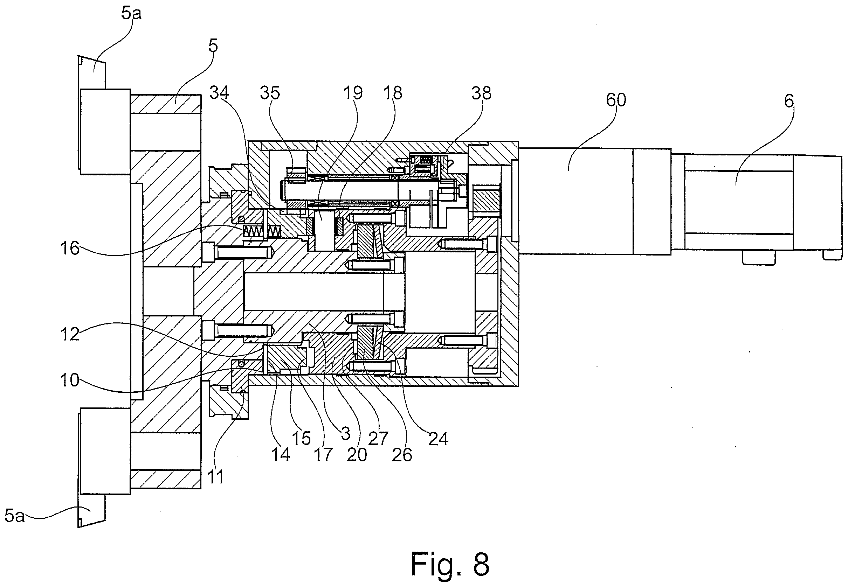

The turret is susceptible of construction modifications, including the position of the servomotor 6 which, like in the example of Figure 8 , may be offset from the axis X-X of the shaft 3 of the tool-holding disk 5 and is preferably oriented parallel thereto with the interposition of a transmission unit with a speed reducer, generally referenced 60 in the above mentioned Figure 8.

Further construction modifications may relate to the position of the disk spring 24 and its preload conditions, without departure from the scope of the invention as described hereinbefore and claimed hereinafter.

## Claims

1. A tool-holder turret comprising a stationary base body (1) with a cavity (2) extending along a longitudinal axis (X-X), a tool-holding disk (5) capable of rotating in both directions of rotation relative to the stationary base body (1) about an axis of rotation which is coaxial to and coincident with said longitudinal axis (X-X), said tool-holding disk (5) being mounted to the end of a shaft (3) which extends along said longitudinal axis (X-X), a first cylindrical annular body (15) which is keyed to said shaft (3) and is only free to axially slide thereon between a first axial position and a second axial position against elastic means (16) acting between said first cylindrical body (15) and said tool-holding disk (5), said first cylindrical body (15) having a plurality of symmetrical cam profiles (17, 17a, 17b,17c, 17d) arranged over a circumference of the front surface of its distal end, with respect to said tool-holding disk (5), lock members (14, 10, 12) for locking said tool-holding disk (5) relative to said stationary base body (1) when said first cylindrical annular body (15) is in its first axial position and for unlocking it when it is in its second axial position, a second cylindrical annular body (20), which is also keyed to said shaft (3) and capable of rotating relative to it, said second cylindrical annular body (20) having a plurality of cam followers (18) engaged at their front with respective symmetrical cam profiles (17,17a,17b,17c,17d) of said first annular body (15), said cam followers and said cam profiles causing said first cylindrical annular body (15) to axially move on said shaft (3) in either direction as a result of angular displacements of said second cylindrical annular body (20), an electric servo-motor (6), which is kinematically linked to said second cylindrical annular body (20) to impart angular displacements thereto in both directions of rotation coaxial to said shaft (3), **characterized in that** said second cylindrical annular body (20) has a rib (28) which axially projects toward said tool-holding disk (5) and extends over a given arc of a circumference (α), that said shaft (3), connected to the tool-holding disk (5), has a front shoulder (29), facing said second cylindrical annular body (20) and extending over a given arc of a circumference (β) which radially coincides with the circumference of the rib (28) that axially projects out of said second cylindrical annular body (20), in the portion of the arc that is not covered by said rib, the circumferential ends (30, 31) of said rib (28) and those (32, 33) of said shoulder defining respective abutments, such that when said abutments are mutually engaged, they are adapted to transfer the angular displacements generated by said servo-motor (6) to said shaft (3), said first cylindrical annular body (15) being kinetically linked (34,35) to an auxiliary shaft (36) which has a braking device (38) that locks its rotation when it is put in action.

2. A turret as claimed in claim 1, **characterized in that** said lock members comprise a first ring of teeth (10) carried by said stationary base body (1) and arranged around said longitudinal axis (X-X) of said cavity (2), a second ring of teeth (12) concentric with said first ring of teeth and carried by said rotary tool-holding disk (5), a third ring of teeth (14) fixed to the axial end facing the tool-holding disk (5) of said first cylindrical annular body (15).

3. A turret as claimed in claims 1 and 2, **characterized in that** said braking device (28) is an electromagnetic brake embracing one end (37) of said auxiliary shaft (36) kinematically linked to said first cylindrical annular body (15).

4. A turret as claimed in claims 1 to 3, **characterized in that** each of said symmetrical cam profiles comprises a cavity (17b) whose flat bottom (17c) is lower than a reference plane surface (17a) and whose sides (17d) comprise flat sections which are symmetrically inclined to the bottom (17c) of the cavity).

5. A turret as claimed in claims 1 to 4, **characterized in that** said cam followers comprise rollers (18) freely rotating about respective pins (19) carried by said second cylindrical annular body (20), the periphery of said rollers contacting respective cam profiles carried by said first cylindrical annular body (15).

6. A turret as claimed in claim 1, **characterized in that** said first cylindrical annular body (15) has a ring gear (28) on its outer peripheral surface, that said auxiliary shaft (36) has a pinion (35), that said pinion and said ring gear are mutually and rotatably engaged and capable of relative axial translation.

7. A turret as claimed in any of claims 1 to 6, **characterized in that** it comprises a pre-loaded axially biasing member (24) located between said second cylindrical annular body (20) and a stop member (25) consisting of an axial shoulder formed in said shaft (3).

8. A turret as claimed in claim 7, **characterized in that** said pre-loaded biasing member is a disk spring (24) located concentric with said shaft (3) of the tool-holding disk (5), said stop member being adjustable by interposition of a shim (26) for imparting the desired pre-load to the disk spring.

9. A turret as claimed in any of claims 1 to 8, **characterized in that** the axis of rotation of the servo-motor is located coaxial with the rotating shaft (3) of the tool-holding disk (5).

10. A turret as claimed in any of claims 1 to 8, **characterized in that** the axis of rotation of the servo-motor (6) is offset from the axis of rotation (3) of the tool-holding disk (5) and is connected thereto with kinematic members (60) interposed therebetween.

## Patentansprüche

1. Ein Werkzeughalterrevolver, der folgendes umfasst: einen stationären Grundkörper (1) mit einem Hohlraum (2), der sich entlang eine Längsachse (X-X) erstreckt; eine Werkzeughalteplatte (5), die in der Lage ist, in beide Drehrichtungen in Bezug auf den stationären Grundkörper (1) über eine Drehachse zu drehen, die koaxial zu und übereinstimmend mit der Längsachse (X-X) ist, indem die Werkzeughalteplatte (5) am Ende einer Welle (3) montiert ist, die sich entlang die Längsachse (X-X) erstreckt; einen ersten zylindrischen ringförmigen Körper (15), der an der Welle (3) verkeilt ist und nur frei ist, axial darauf zwischen einer ersten axialen Position und einer zweiten axialen Position gegen elastische Mittel (16) zu gleiten, die zwischen dem ersten zylindrischen Körper (15) und der Werkzeughalteplatte (5) wirken, wobei der erste zylindrische Körper (15) mehrere symmetrische Nockenprofilen (17, 17a, 17b, 17 c, 17d) aufweist, die über einen Umfang der Vorderseite seines distalen Endes in Bezug auf die Werkzeughalteplatte (5) angeordnet sind; Sperrglieder (14, 10, 12), um die Werkzeughalteplatte (5) in Bezug auf den stationären Grundkörper (1) zu sperren, wenn der erste zylindrische ringförmige Körper (15) in seiner ersten axialen Position ist, und um die Werkzeughalteplatte (5) zu entsperren, wenn er in seiner zweiten axialen Position ist; einen zweiten zylindrischen ringförmigen Körper (20), der auch an der Welle (3) verkeilt ist und in der Lage ist, in Bezug auf sie zu drehen, wobei der zweite zylindrische ringförmige Körper (20) mehrere Nockenfolger (18) aufweist, die auf ihrer Vorderseite mit jeweiligen symmetrischen Nockenprofilen (17,17a, 17b, 17c, 17d) des ersten ringförmigen Körpers (15) in Eingriff stehen, indem die Nockenfolger und die Nockenprofilen verursachen, dass der erste zylindrische ringförmige Körper (15) sich axial auf der genannten Welle (3) in beide Richtungen als Folge von Winkelverschiebungen des zweiten zylindrischen ringförmigen Körpers (20) bewegt; einen elektrischen Servomotor (6), der kinematisch mit dem zweiten zylindrischen ringförmigen Körper (20) verbunden ist, um Winkelverschiebungen dazu in beiden Drehrichtungen koaxial zu der Welle (3) zu verleihen, **dadurch gekennzeichnet, dass** der zweite zylindrische ringförmige Körper (20) eine Rippe (28) aufweist, die axial zur Werkzeughalteplatte (5) hin vorsteht und sich über einen gegebenen Kreisbogen (α) erstreckt, dass die mit der Werkzeughalteplatte (5) verbundene Welle (3) eine vordere Schulter (29) aufweist, die dem zweiten zylindrischen ringförmigen Körper zugewandt ist und die sich über einen gegebenen Kreisbogen (β) erstreckt, der radial mit dem Umfang der Rippe (28) zusammenfällt, die axial aus dem zweiten zylindrischen ringförmigen Körper (20) in dem Abschnitt des Bogens herausragt, der nicht von der Rippe bedeckt ist, indem die umlaufenden Enden (30, 31) der Rippe (28) und jene (32, 33) der Schulter jeweilige Anschläge bilden, so dass sie, wenn die Anschläge gegenseitig in Eingriff stehen, in der Lage sind, die vom Servomotor (6) erzeugten Winkelverschiebungen auf die Welle (3) zu übertragen, indem der erste zylindrische Ringkörper (15) mit einer Hilfswelle (36) kinetisch verbunden ist (34), die eine Bremseinrichtung (38) aufweist, die ihre Drehung verriegelt, wenn sie betätigt wird.

2. Ein Revolver nach Anspruch 1, **dadurch gekennzeichnet, dass** die Sperrglieder folgendes umfassen: einen ersten Zahnring (10), der vom stationären Grundkörper (1) getragen wird und um die Längsachse (X-X) des Hohlraums (2) herum angeordnet ist, einen zweiten Zahnring (12), der konzentrisch mit dem ersten Zahnring ist und von der Werkzeughalteplatte (5) getragen wird, und einen dritten Zahnring (14), der an dem der Werkzeugaufnahmeplatte (5) des ersten zylindrischen Ringkörpers (15) zugewandten axialen Ende befestigt ist.

3. Ein Revolver nach den Ansprüchen 1 und 2, **dadurch gekennzeichnet, dass** die Bremseinrichtung (28) eine elektromagnetische Bremse ist, die ein Ende (37) der Hilfswelle (36) umgibt, die kinematisch mit dem ersten zylindrischen Ringkörper (15) verbunden ist.

4. Ein Revolver nach den Ansprüchen 1 bis 3, **dadurch gekennzeichnet, dass** jedes der symmetrischen Nockenprofile einen Hohlraum (17b) umfasst, dessen flacher Boden (17c) niedriger als eine Bezugsebenenfläche (17a) ist und dessen Seiten (17d) flache Abschnitte umfassen, die symmetrisch zum Boden (17c) des Hohlraums geneigt sind.

5. Ein Revolver nach den Ansprüchen 1 bis 4, **dadurch gekennzeichnet, dass** die Nockenfolger Rollen (18) umfassen, die sich frei um jeweilige Stifte (19) drehen, die vom zweiten zylindrischen ringförmigen Körper (20) getragen werden, wobei der Umfang der Rollen jeweilige Nockenprofile berührt, die vom ersten zylindrischen ringförmigen Körper (15) getragen werden.

6. Ein Revolver nach Anspruch 1, **dadurch gekennzeichnet, dass** der erste zylindrische Ringkörper (15) an seiner Außenumfangsfläche ein Ringrad (28) aufweist, dass die Hilfswelle (36) ein Ritzel (35) aufweist, dass das Ritzel und das Ringrad gegenseitig und drehbar in Eingriff stehen und in der Lage sind, eine relative axiale Translation zu ermöglichen.

7. Ein Revolver nach einem der Ansprüche 1 bis 6, **dadurch gekennzeichnet, dass** er ein vorgespanntes, axiales Vorspannelement (24) umfasst, das zwischen dem zweiten zylindrischen ringförmigen Körper (20) und einem aus einer in der Welle (3) gebildeten axialen Schulter bestehenden Anschlagglied (25) angeordnet ist.

8. Ein Revolver nach Anspruch 7, **dadurch gekennzeichnet, dass** das vorgespannte Vorspannelement eine mit der Welle (3) der Werkzeugaufnahmeplatte (5) konzentrische Scheibenfeder (24) ist, wobei das Anschlagglied durch Zwischenhaltung einer Unterlage (26) zur Verleihung der gewünschten Vorspannung der Scheibenfeder einstellbar ist.

9. Ein Revolver nach einem der Ansprüche 1 bis 8, **dadurch gekennzeichnet, dass** die Drehachse des Servomotors koaxial zur Drehwelle (3) der Werkzeugaufnahmeplatte (5) ist.

10. Ein Revolver nach einem der Ansprüche 1 bis 8, **dadurch gekennzeichnet, dass** die Drehachse des Servomotors (6) gegenüber der Drehachse Drehwelle (3) der Werkzeugaufnahmeplatte (5) versetzt ist und mit dazwischen angeordneten kinematischen Elementen (60) mit der Werkzeugaufnahmeplatte verbunden ist.

## Revendications

1. Une tourelle porte-outils comprenant : un corps de base stationnaire (1) avec une cavité (2) s'étendant le long d'un axe longitudinal (X-X); un disque porte-outils (5) capable de tourner dans les deux sens de rotation par rapport au corps de base stationnaire (1) autour d'un axe de rotation coaxial et coïncidant avec ledit axe longitudinal (X-X), ledit disque porte-outils (5) étant monté à l'extrémité d'un arbre (3) qui s'étend le long dudit axe longitudinal (X-X); un premier corps annulaire cylindrique (15) qui est enclenché sur ledit arbre (3) et qui est seulement libre de glisser axialement sur celui-ci entre une première position axiale et une seconde position axiale contre des moyens élastiques (16) agissant entre ledit premier corps cylindrique (15) et ledit disque porte-outils (5), ledit premier corps cylindrique (15) ayant une pluralité de profils de came symétriques (17, 17a, 17b, 17c, 17d) disposés sur une circonférence de la surface frontale de son extrémité distale par rapport audit disque porte-outils (5); des éléments de verrouillage (14, 10, 12) pour verrouiller ledit disque porte-outils (5) par rapport audit corps de base stationnaire (1) lorsque ledit premier corps annulaire cylindrique (15) est dans sa première position axiale et pour le déverrouiller lorsqu'il est dans sa deuxième position axiale ; un second corps annulaire cylindrique (20), qui est également enclenché sur ledit arbre (3) et qui est capable de tourner par rapport à celui-ci, ledit second corps annulaire cylindrique (20) comportant une pluralité de suiveurs de came (18) engagés frontalement avec des respectifs profils de came symétriques (17, 17a, 17b, 17c, 17d) dudit premier corps annulaire (15), lesdits suiveurs de came et lesdits profils de came causant que ledit premier corps annulaire cylindrique (15) se déplace axialement le long dudit arbre (3) dans l'une ou l'autre direction à la suite de déplacements angulaires dudit second corps annulaire cylindrique (20); un servomoteur électrique (6), qui est relié cinématiquement audit second corps annulaire cylindrique (20) pour lui conférer des déplacements angulaires dans les deux sens de rotation coaxiaux dudit arbre (3), **caractérisé en ce que** ledit second corps annulaire cylindrique (20) a une nervure (28) qui se projette axialement vers ledit disque porte-outils (5) et s'étend sur un arc de circonférence (α) donné, **en ce que** ledit arbre (3) relié au disque porte-outils (5) a un épaulement antérieur (29) faisant face audit second corps annulaire cylindrique (20) et s'étendant sur un arc de circonférence (β) donné qui coïncide radialement avec la circonférence de la nervure (28) qui fait saillie axialement hors dudit second corps annulaire cylindrique (20) dans la partie de l'arc qui n'est pas recouverte par ladite nervure, les extrémités circonférentielles (30, 31) de ladite nervure (28) et celles (32, 33) dudit épaulement définissant des butées respectives de sorte que lorsque lesdites butées sont mutuellement engagées, elles sont adaptées pour transférer les déplacements angulaires engendrés par ledit servomoteur (6) audit arbre (3), ledit premier corps annulaire cylindrique (15) étant relié cinématiquement (34, 35) à un arbre auxiliaire (36) qui comporte un dispositif de freinage (38) qui bloque sa rotation lorsqu'il est actionné.

2. Une tourelle selon la revendication 1, **caractérisée en ce que** lesdits éléments de verrouillage comprennent un premier anneau de dents (10) porté par ledit corps de base stationnaire (1) et disposé autour dudit axe longitudinal (X-X) de ladite cavité (2), un second anneau de dents (12) concentrique audit premier anneau de dents et porté par ledit disque porte-outils (5), un troisième anneau de dents (14) fixé à l'extrémité axiale qui fait face au disque porte-outils (5) dudit premier corps annulaire cylindrique (15).

3. Une tourelle selon les revendications 1 et 2, **caractérisée en ce que** ledit dispositif de freinage (28) est un frein électromagnétique embrassant une extrémité (37) dudit arbre auxiliaire (36) relié cinématiquement audit premier corps annulaire cylindrique (15).

4. Une tourelle selon les revendications 1 à 3, **caractérisée en ce que** chacun desdits profils de came symétriques comprend une cavité (17b) dont le fond plat (17c) est inférieur à une surface d'un plan de référence (17a) et dont les côtés (17d) comprennent des sections plates, inclinées symétriquement vers le fond (17c) de la cavité.

5. Une tourelle selon les revendications 1 à 4, **caractérisée en ce que** lesdits suiveurs de came comprennent des rouleaux (18) qui tournent librement autour des respectifs pivots (19) portés par ledit second corps annulaire cylindrique (20), la périphérie desdits rouleaux étant en contact avec des respectives profils de came portés par ledit premier corps annulaire cylindrique (15).

6. Une tourelle selon la revendication 1, **caractérisée en ce que** ledit premier corps annulaire cylindrique (15) présente une couronne dentée (28) sur sa surface périphérique extérieure, **en ce que** ledit arbre auxiliaire (36) a un pignon (35), **en ce que** ledit pignon et ladite couronne dentée sont mutuellement engagés en rotation et sont capables d'une translation axiale relative.

7. Une tourelle selon l'une quelconque des revendications 1 à 6, **caractérisée en ce qu'**elle comprend un élément de sollicitation axial préchargé (24) situé entre ledit second corps annulaire cylindrique (20) et un élément d'arrêt (25) constitué d'un épaulement axial formé dans ledit arbre (3).

8. Une tourelle selon la revendication 7, **caractérisée en ce que** ledit élément de sollicitation préchargé est un ressort à disque (24) concentrique audit arbre (3) du disque porte-outils (5), ledit élément d'arrêt pouvant être réglé par interposition d'une cale (26) pour conférer la précharge souhaitée au ressort à disque.

9. Une tourelle selon l'une quelconque des revendications 1 à 8, **caractérisée en ce que** l'axe de rotation du servomoteur est coaxial à l'arbre de rotation (3) du disque porte-outils (5).

10. Une tourelle selon l'une quelconque des revendications 1 à 8, **caractérisée en ce que** l'axe de rotation du servomoteur (6) est décalé par rapport à l'axe de rotation (3). arbre de rotation du disque porte-outils (5) et est relié à celui-ci avec des éléments cinématiques (60) interposés entre eux.
